# EUROPEAN PATENT SPECIFICATION

(11) **EP 0 245 699 B1**
(45) Date of publication and mention of the grant of the patent: **20.01.1993**
(21) Application number: 87106187.5
(22) Date of filing: 28.04.1987
(51) Int. Cl.: B31D 5/00

(54) **Method and apparatus for making a filter from a material for a filter element**
Verfahren und Apparat zum Anfertigen von Filtern aus einem dafür geeigneten Material
Procédé et appareil pour la fabrication de filtres à partir du matériau approprié

(30) Priority: 28.04.1986 JP 99236/86; 02.05.1986 JP 102745/86; 02.05.1986 JP 102746/86
(43) Date of publication of application: 19.11.1987
(73) Proprietor: NIPPONDENSO CO., LTD., Kariya-shi Aichi-ken (JP)
(72) Inventor: Matsuyama, Harukazu, Takahama-shi Aichi (JP); Kato, Tetsuo, Toyota-shi Aichi (JP); Hibi, Yasuo, Oobu-shi Aichi (JP); Inukai, Satoshi, Kariya-shi Aichi-ken (JP); Suzuki, Masanori, Kariya-shi Aichi (JP); Yamaguchi, Yoshimitsu, Anjo-shi Aichi (JP)
(74) Representative: Klingseisen, Franz, Dipl.-Ing.

(56) References cited:
- EP-A- 0 018 610
- FR-A- 1 276 345
- GB-A- 1 188 525
- US-A- 2 084 362
- US-A- 2 685 827
- US-A- 2 685 828
- US-A- 2 761 490
- US-A- 3 486 626
- US-A- 3 948 712

## Description

The present invention relates to a process for making a filter from a material for a filter element as well an apparatus for performing the process, wherein the distance between adjacent ridges of a corrugated strip is reduced. More particularly, the apparatus of the present invention is useful for contracting a corrugated material for a filter element having a plurality of alternating groups of high and low ridges in the direction in which those ridges are juxtaposed to one another.

An apparatus for contracting a continuously corrugated material in the direction in which its ridges are juxtaposed to one another has been known. This kind of apparatus is, for example, used for reducing the pitch or distance between the ridges defining the fins on a heat exchanger. The conventional apparatus includes a guide plate on which the lower side of a continuously corrugated material is supported which is fed by toothed forming or feeding rollers, and a braking plate pressing against the upper side of the corrugated material to create a frictional braking force to reduce the pitch between adjacent ridges.

The conventional apparatus has, however, the disadvantage that the contracted material cannot be controlled as to the pitch between adjacent ridges. As the braking plate is pressed against the ridges of a corrugated material to contract it, the braking or contracting force caused by the braking plate should be varied with the height of the ridges and the variation of the contracting force makes the pitch between the ridges on the contracted material irregular. The conventional apparatus is, therefore, unusable for contracting a corrugated material having a varying ridge height.

An object of the present invention is to provide a process for forming a filter from a material of a filter element and
to provide an apparatus for contracting a material for a filter element which can control the pitch between adjacent ridges of the contracted material.

According to the present invention, the object is attained by a process according to claim 1 and by an apparatus according to claim 2. A guide plate on which a corrugated material for a filter element slides is provided, and a plurality of guide grooves are formed on the guide plate. The guide grooves extend from one end of the guide plate to the other end in a direction perpendicular to the direction in which the corrugated material is contracted and are spaced apart from one another by a distance which decreases from one end of the guide plate to the other end. A plurality of lower guide members supports the corrugated material in such a manner that the lower guide members engages with one of downwardly facing grooves on the lower side of the corrugated material. The lower guide members move together along the guide grooves from one end of the guide plate to the other end. A plurality of upper guide members are provided between every adjoining two of the lower guide members. Each of the upper guide members engages with one of upwardly facing grooves on the upper side of the corrugated material. The upper guide members moves together with the lower guide members and are spaced apart from one another by a distance which decreases with the movement of the upper guide members from one end of the guide plate to the other end.

The upper and lower guide members are moved together in the direction perpendicular to the direction in which the corrugated material is contracted. The upper and lower guide members moves in order to decrease their respective spacings so that the corrugated material which is supported by the lower guide members in some of the grooves on its lower side and by the upper guide members in some of the grooves on its upper side is corrugated until the ridges thereof have an appropriately reduced pitch therebetween.

The apparatus of the present invention can always produce a constant contracting force and can, therefore, reduce the pitch between the ridges on a corrugated material without causing any appreciable variation in ridge height. Moreover, it can be satisfactorily used for contracting even a corrugated material having a varying ridge height.

A plurality of holding blocks which hold a continuously corrugated strip of a material for a filter element is provided on a flat surface of a back plate. An adjacent pair of the holding blocks is rotatably connected to each other. Two blocks of a plurality of the holding blocks are pivoted on the back plate, and both ends of the holding blocks are connected with a rounding device so that a plurality of holding blocks make a circle. The both end blocks of a plurality of the holding blocks are attached to each other in order to hold the position of the holding blocks when a plurality of holding blocks make a circle.

Such a rounding apparatus can round the continuously corrugated strip of a material for a filter element automatically and quickly. The apparatus can round the continuously corrugated strip effectively even though the width of the corrugation of the continuously corrugated strip are varied.

The apparatus can employ a shaping block having a core which opens both ends of the shaping block. The sectional shape of the core is continuously vaired from one end of the shaping block to another end of the shaping block. The apparatus further employs pushing means for pushing a filter element within the core from one end of the shaping block to the other end of the shaping block.

A continuously corrugated strip of a material for a filter element both ends of which are connected to each other so that the continuously corrugate strip makes a ring is carried within the core from one end of the shaping block to the other end of the shaping block by the pushing means. Since the sectional shape of the core is continuously varied, the strip of a material for a filter element is shaped to be a predetermined shape when the strip is shifted through the core.

The apparatus can shape the filter element to a predetermined shape automatically and quickly.

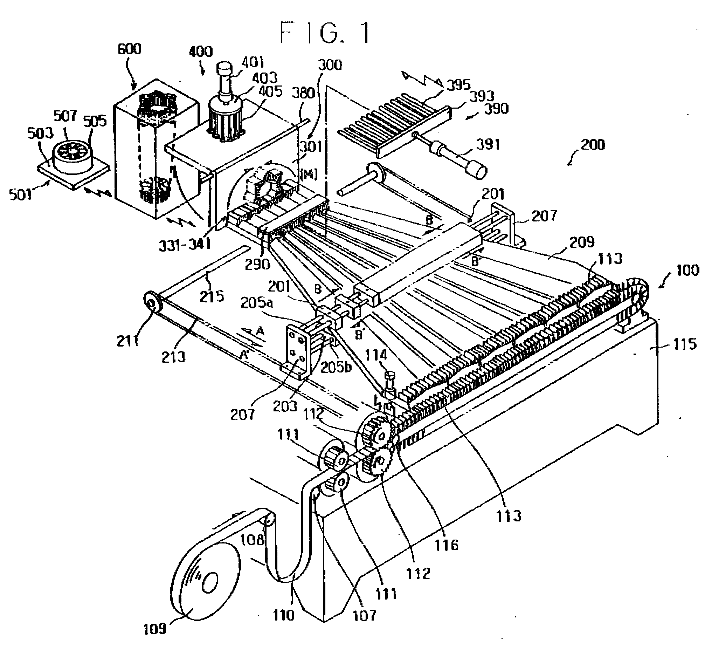

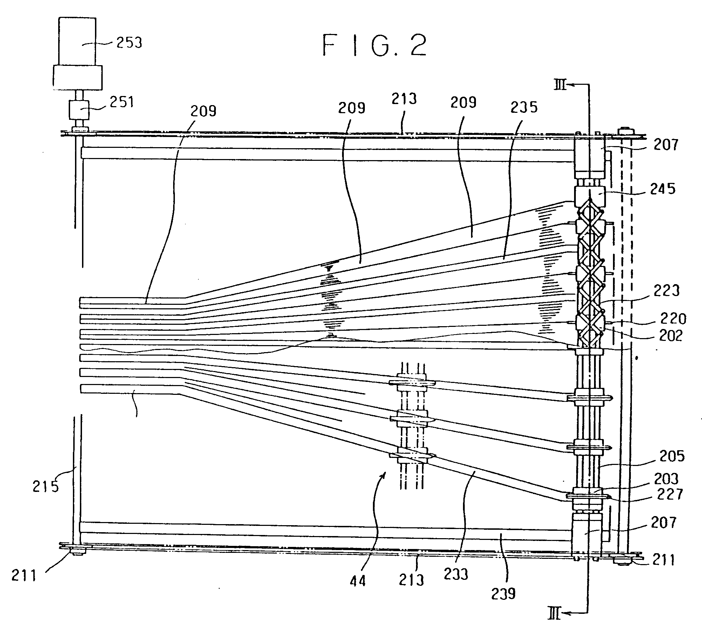

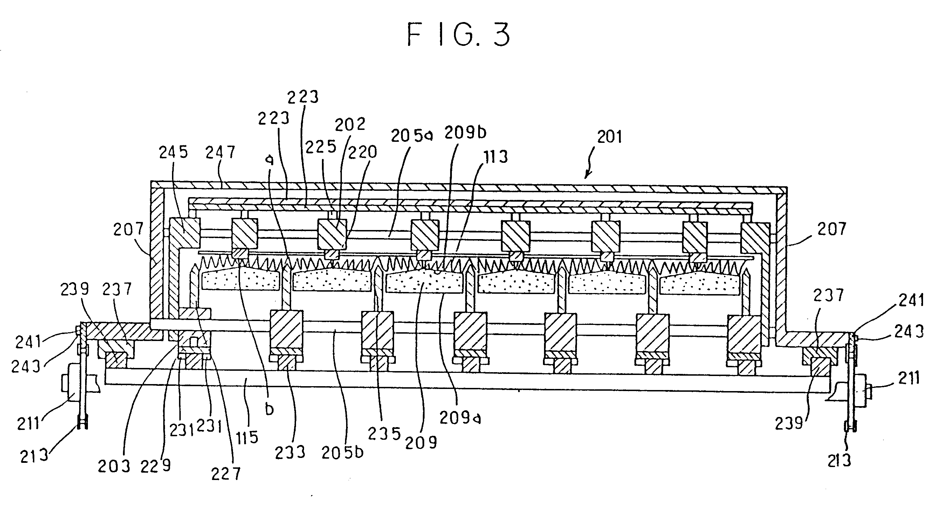

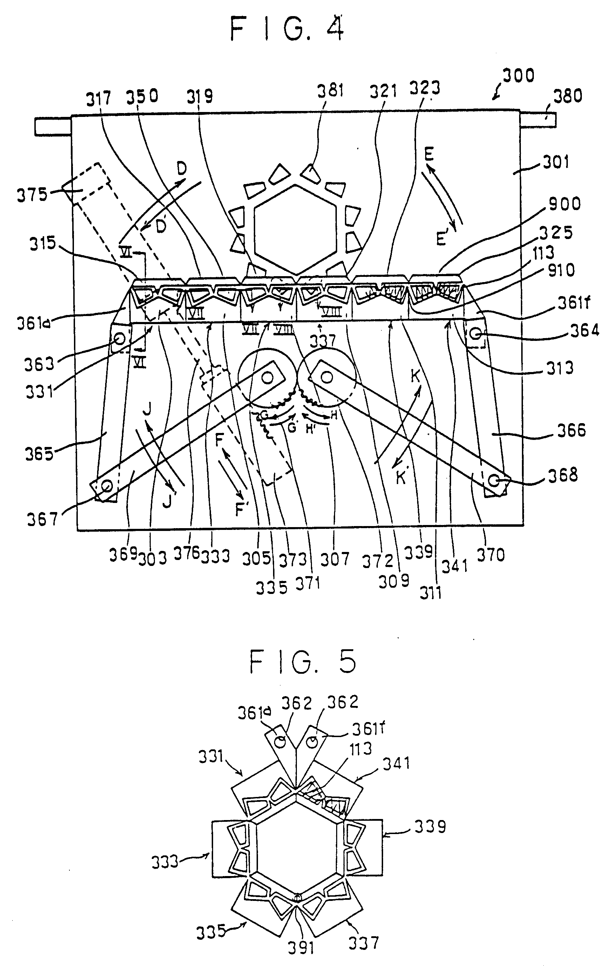

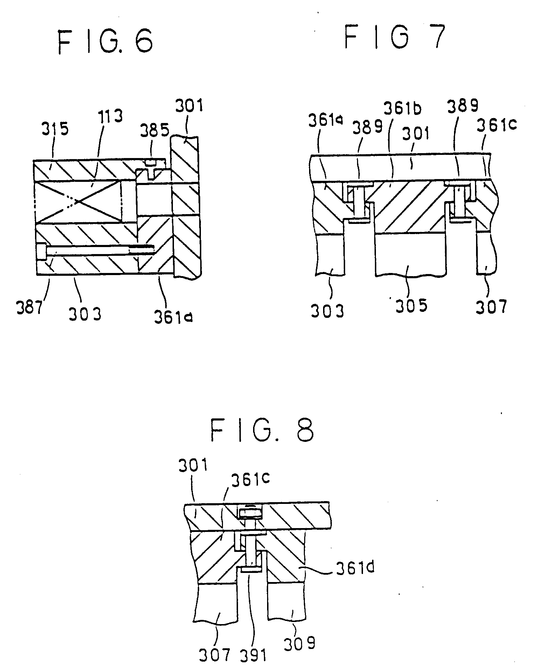

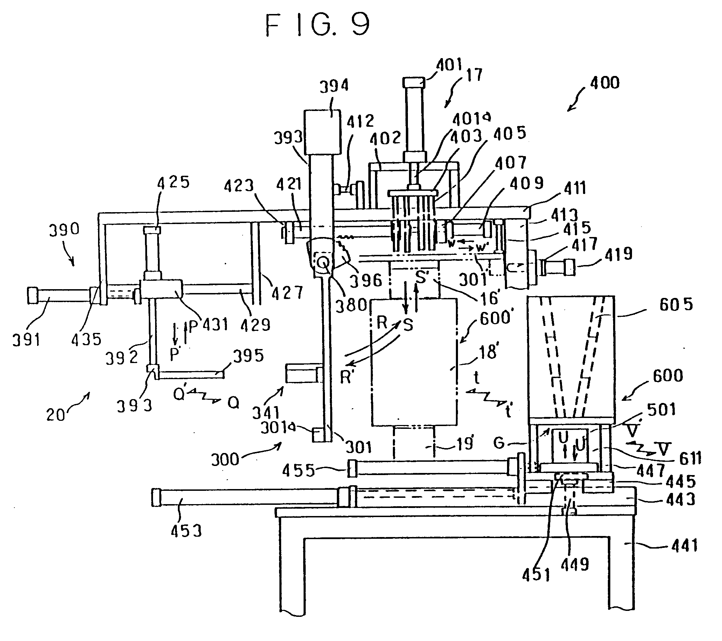

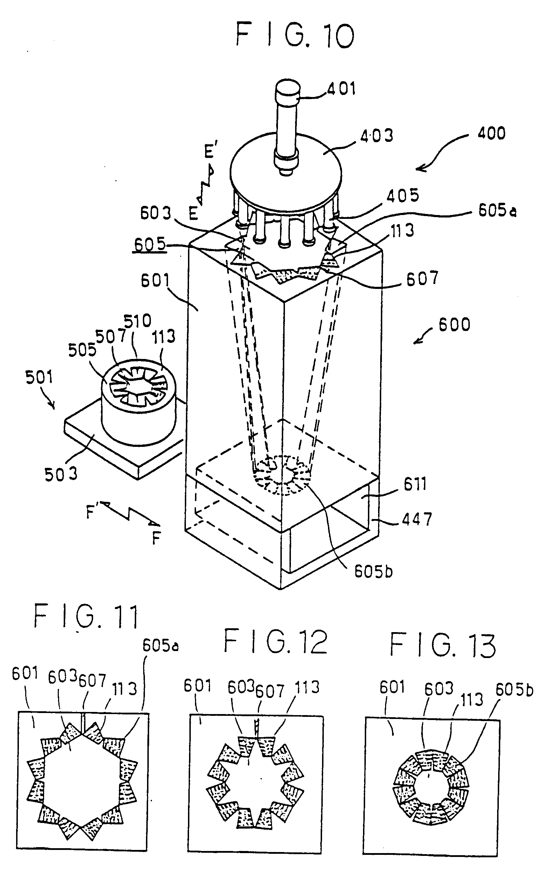

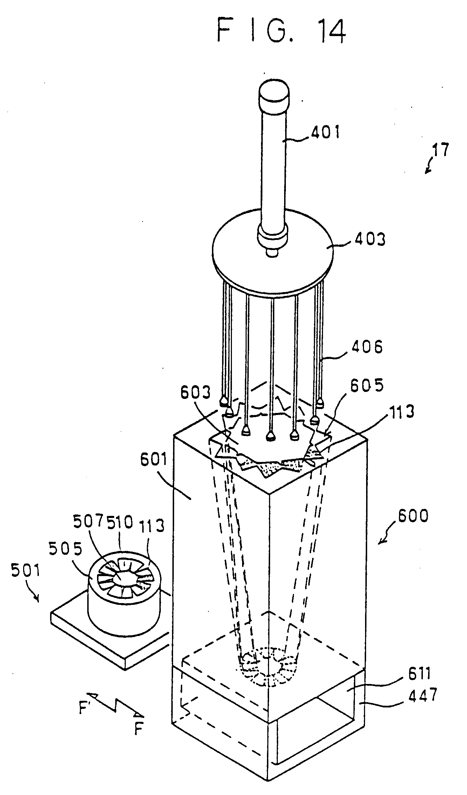

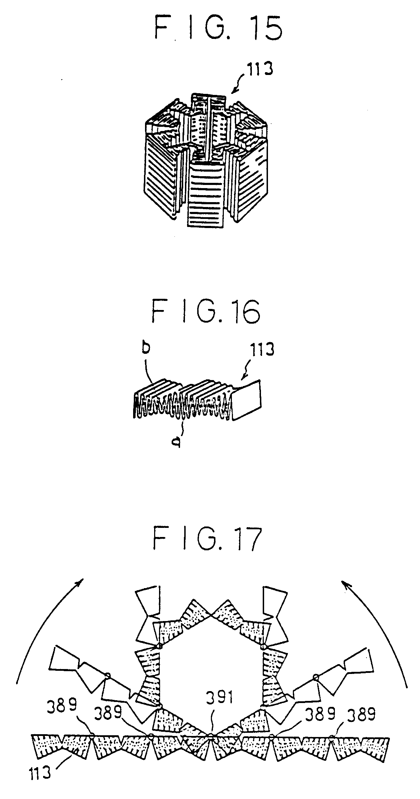

FIGURE 1 is a perspective view of a filter manufacturing apparatus as a whole, FIGURE 2 is a top view of a contracting device, FIGURE 3 is a sectional view taken along the line III-III of FIGURE 2, FIGURE 4 is a front elevational view of a rounding device, FIGURE 5 is a front elevational view of rounding blocks in a circular array, FIGURE 6 is a sectional view taken along the line VI-VI of FIGURE 4, FIGURE 7 is a sectional view taken along the line VII-VII of FIGURE 4, FIGURE 8 is a sectional view taken along the line VIII-VIII of FIGURE 4, FIGURE 9 is a side elevational view of a pusher, the rounding device and a shaping device, FIGURE 10 is a perspective view of the shaping device with a pallet, FIGURES 11 to 13 show different cross-sectional shapes of a shaping space, FIGURE 14 is a perspective view of a modified shaping device, FIGURE 15 is a perspective view of a final filter element, FIGURE 16 is a perspective view of a filter element as folded and FIGURE 17 is a view showing the movement of the rounding blocks.

The present invention is described by way of example with reference to the drawings. FIGURE 1 is a schematic view of a whole apparatus for manufacturing filter elements.

A strip 110 of a filter material containing a fixing agent is unwound from a roll 109 and advanced to a pair of line marking rollers 111 via a first auxiliary roller 108 and a second auxiliary roller 107. The strip 110 forms a sagging loop which keeps the tension of the strip under an appropriate level between the first and second auxiliary rollers 108 and 107.

Each of the line marking rollers 111 has a plurality of appropriately spaced apart line marking teeth on the outer peripheral surface thereof. The rollers 111 make a plurality of folding lines in the upper and lower surfaces of the strip 110 when the strip 110 passes between the rollers 111.

The strip 110 leaving the line marking rollers 111 travels to a pair of folding rollers 112. Each of the folding rollers 112 has a plurality of folding teeth on its outer peripheral surface. The rollers 112 fold the strip along the folding lines when the strip passes between the rollers 112. The folding teeth on each folding roller 112 consist of two sets of teeth, i.e., a first set of teeth having a gradually increasing height and a second set of teeth having a gradually decreasing height. The strip which has been folded into a corrugated form by the folding rollers 112 is cut by a cutter 114 to form a corrugated element 113 having an appropriate length. The element 113 is conveyed longitudinally by a feed chain 116.

The line marking rollers 111, the folding rollers 112 and the feed chain 116 are supported on a base 115 and define a folding device 100.

The element 113 which has been corrugated by the folding device 100 is, then, contracted by a contracting device 200 so that the distance between the ridges of the corrugated element are reduced. The contracted element 113 is transferred to a rounding device 300 by which the element 113 is rounded and joined at the opposite ends thereof to form an annular element. Then, the annular element is formed into a final shape by a final shaping device 400 and the finally shaped element is received onto a pallet 501 for delivery to a different apparatus or place.

The construction of the contracting device 200 is described with reference to FIGURES 1 to 3. FIGURE 2 is a top plan view of the contracting device 200 and FIGURE 3 is a sectional view taken along the line III-III of FIGURE 2. Two pieces of first guide rails 239 are provided along both sides of the base 115. A block 207 having an L-shaped vertical section is supported by a bearing 237 which is mounted on each of first guide rail 239. The two blocks 207 are connected each other by a top plate 247.

Seven pieces of second guide rails 233 are provided on the base 115. The second guide rails 233 are spaced apart from one another by a distance which gradually decreases from one end of the base 115 to another end. The guide rails 233 have parallel end portions 233a adjacent to the other end of the base 115. A distance between the parallel end portions is smaller than that of remaining portions of the parallel end portions 233a.

A plate 229 on which a rectangular lower block 203 is secured is provided on each second guide rail 233. Guide rollers 231 which are capable of rolling on the second guide rail 233 is provided with the plate so that the plate 229 and the lower block 203 can move along the second guide rail 233.

A plate shaped lower guide member 227 elongating upwardly is fixed with the top surface of each lower block 203. The guide member 227 has an acute portion at an upper edge thereof.

A guide plate which is composed of six guide plate segments 209 is provided above the lower blocks 203 and the lower guide members 227. Every two adjoining guide plate segments 209 define therebetween a guide groove 235 which extends in parallel to the second guide rails 233, and in which one of the lower guide members 227 is movably disposed.

Each guide plate segment 209 has a flat lower surface 209a and an angular upper surface 209b defining by a peak at the center of the segment 209. The guide plate segments 209 support the corrugated element 113 on the upper surfaces 209b thereof. The element 113 has a plurality of alternating groups of ridges having an increasing height and ridges having a decreasing height, as shown in FIGURE 16. The upper surfaces 209b of the guide plate segments 209 are so shaped as to suit the varying height of the ridges on the element 113.

An upper guide member 220 is provided above the upper surface 209b of each guide plate segment 209 in such a manner that the member 220 faces the peak of the upper surface 209b. The upper guide member 220 is secured to an upper block 202 located thereabove. Two pieces of parallel upper guide bars 205a extend through six pieces of the upper blocks 202. The upper blocks 202 are slidablly by provided on the guide bars 205a.

Two pieces of parallel lower guide bars 205b extend through the lower blocks 203 so that the lower blocks 203 are able to slide along the lower guide bars 205b. A sliding block 245 is provided between each of the two outermost lower blocks 203 and one of the L-shaped blocks 207. The upper and lower guide bars 205a and 205b are secured to the sliding blocks 245 and the blocks 207.

A pantograph 223 is provided above the upper blocks 202 and the sliding blocks 245 and connected thereto by pins 225. The pantograph 223 comprises a plurality of link mechanisms as known in the art so that the contraction or the expansion of the link mechanisms causes the upper blocks 202 to move along the upper guide bars 205a to one another (as shown by an arrow B in FIGURE 1) or away from one another (as shown by an arrow B' in FIGURE 1).

These elements such as the lower blocks 203, the lower guide members 227, the sliding blocks 245, the upper guide members 220, the upper blocks 202, the blocks 207, the pantograph 223, the upper guide bars 205a and the lower guide bars 205b constitute an expanding and contracting device 201.

An attachment 241 is joined to the outer edge of each block 207 by bolts 243. The attachment 241 is functionally connected with a chain 213 so that the block 207 is moved in accordance with the movement of the chain 213.

A pair of sprockets 211 which are connected each other by a connecting rod 215 are provided at each end of the base 115. Each chain 213 extends between one of the sprockets 211 provided at one end of the base 215 and one of the sprockets 211 at the other end thereof and is connected to one of the attachments 241.

A driving motor 253 is connected by a coupling 251 to one end of the connecting rod 215 which connects one of the pairs of sprockets 211 so that the output of the motor 253 is transmitted through the coupling 251 to the sprockets 211 to rotate them and thereby the chains 213 is moved in the direction of an arrow A in FIGURE 1.

Each guide plate segment 209 has a converging portion 209a and a parallel portion 209b extending from the convergent end of the converging portion 209a, as shown in FIGURE 2.

A shaping gate 290 is provided at the junction between 0the converging and parallel portions 209a and 209b as shown in FIGURE 1. The gate 290 permits the element 113 which has been contracted to an appropriate length to pass therethrough. After the element 113 has reached the gate 290, the element 113 is then pushed forward toward the rounding device 300 along the parallel portions 209b by a pushing mechanisim 390 as shown in FIGURE 1. The pushing 390 is comprised of a plurality of push rods 395, a connecting plate 393 to which each push rod 395 is connected and a pushing cylinder 391 connected to the connecting plate 393.

The rounding device 300 will now be described in detail. FIGURE 4 is a front elevational view of the rounding device 300. A substantially square back plate 301 has an upper edge provided with a shaft 380 about which it is rotatable. Six pieces of rounding blocks 331, 333, 335, 337, 339 and 341 are provided on the back plate 301. Each of the rounding blocks 331 to 341 comprises an upper block 315, 317, 319, 321, 323 and 325 and a lower block 303, 305, 307, 309, 311 and 313. The upper blocks 315 to 325 and the lower blocks 303 to 313 define therebetween an open space 350 which extends throughout all of the blocks for receiving a single element 113 therein.

A projection 900 which extends into the element holding space 350 is provided at approxinately center of each of the upperblocks 315 - 325. A projection 910 which likewise extends into the space 350 are provided at the adjoining ends of every two adjacent lower blocks. The projection 900 of each upper block is located at one of the lowest ridge portions of the element 113 and the projection 910 of each lower block is located at the highest ridge portions thereof.

Links 361a, 361b, 361c, 361d, 361e and 361f are provided between the back plate 301 and each of the rounding blocks 331 to 341.

FIGURE 6 is a sectional view taken along the line VI-VI of FIGURE 4. As shown from FIGURE 6, the upper block 315 is connected to the link 361a by a connecting pin 385 and the lower block 303 is connected to the link 361a by a bolt 387.

FIGURE 7 is a sectional view taken along the line VII-VII of FIGURE 4. As shown from FIGURE 7, every two adjoining link plates 361a and 361b or 361b and 361c are rotatably connected to each other by a pin 389. Therefore, the rounding blocks 331 to 341 are rotatably connected around the respective pins 389.

FIGURE 8 is a sectional view taken along the line VIII-VIII of FIGURE 4. As shown therefrom, the link plates 361c and 361d which are located behind the respective central rounding blocks 335 and 337, are rotatably connected to each otherby a pin 391 which rotatably connects the link plates 361c and 361d to the back plate 301.

Links 365 and 366 are connected to the respective outermost link plates 361a and 361f, by pins 363 and 364. Levers 369 and 370 are rotatably connected to the other ends of the respective links 365 and 366, by pins 367 and 368. A first gear 371 and a second gear 372 each having a toothed outer peripheral surface are rotatably connected to the ends of the respective levers 369 and 370.

The first gear 371 meshes with a rack 373 which is connected to an actuator 375 which comprises a hydraulic or pneumatic cylinder via a connecting rod 376. The reciprocatory motion of the actuator 375 causes the rack 373 move in the direction of an arrow F or F' in FIGURE 4. The first gear 371 is, therefore, rotated in the direction of an arrowG or G' to thereby move the lever 369 in the direction of an arrow J or J'. The first and second gears 371 and 372 mesh with each other and the rotation of the first gear 371 in the direction of the arrow G or G', therefore, causes the rotation of the second gear 372 in the direction of an arrow H or H' and thereby the rotation of the lever 370 in the direction of an arrow K or K'.

The rotation of the levers 369 and 370 in the directions of the arrows J and K, respectively, causes the link plates 365 and 366 rotate around the pin 391 in the directions of arrows D and E, respectively. As a result, the element rounding blocks 331 to 341 are raised in two opposite directions from the pin 391 and the outermost blocks are joined to each other to form a circular array as shown in FIGURE 5.

The back plate 301 is provided therethrough with a plurality of separate pusher rod receiving holes 381 forming a circular array with which the element holding space 350 in the circular array of the rounding blocks as shown in FIGURE 5 is alignable.

FIGURE 9 is a side elevational view of the pusher 390, the rounding device 300 and the shaping device 400. A plate 393 and a sectoral gear 396 are rotatably connected to the shaft 380 provided at the upper end of the back plate 301. A weight balancer 394 having an appropriate weight is secured to the other end of the plate 393 remote from the shaft 380. The sectoral gear 396 has a toothed arcuate surface. A rack 421 meshes with the teeth of the sectoral gear 396. The rack 421 is longitudinally movably supported by bearings 423 and 407. An actuator 409, which may, for example, comprise a pneumatic or hydraulic cylinder, is provided at the other end of the rack 421 remote from the sectoral gear. The bearings 423 and 407 are secured to an upper plate 411.

The pusher 390 faces the rounding blocks 331 to 341 of the rounding device.

The pusher 390 includes a plurality of pusher rods 395 for pushing a corrugated element into the element holding space 350 of the rounding blocks and a connecting plate 393 to which each pusher rod 395 is connected at one end. A shaft 392 has one end connected to the plate 393 and an actuator 425, which may, for example, comprise a hydraulic or pneumatic cylinder, is connected to the other end of the connecting rod 392. The vertical of the actuator 425 makes the connecting shaft 392, the connecting plate 393 and the pusher rods 395 move in the direction of an arrow P or P' in FIGURE 9.

The connecting rod 392 and the actuator 420, which are connected to each other, are also connected to a slider 431. The slider 431 moves along a horizontal shaft 429. An actuator 391, which may comprise a hydraulic or pneumatic cylinder, is connected to the slider 431 so that its reciprocative motion may cause the slider 431 move on the shaft 429 in the direction of an arrow Q or Q' in FIGURE 9. The shaft 429 and the actuator 391 are supported on the respective plates 427 and 435, which are secured to the upper plate 411.

When the actuator 409 is driven in the direction of an arrow W in FIGURE 9, the rack 421 is also moved in the direction of the arrow W. As a result, the sectoral gear 396 is rotated in the direction of an arrow R and the back plate 301 is also rotated about the shaft 380 in the direction of the arrow R. If the actuator 409 is driven in the direction of an arrow W', the rack 421 is also moved in the direction of the arrow W' and the back plate 301 is, therefore, rotated about the shaft 380 in the direction of an arrow R'. The back plate 301 takes its position shown in FIGURE 9 when the actuator 409 has been completely retracted in the direction of the arrow W'. Any further rotation of the back plate is prevented by a stopper 412 provided on the upper plate 411. Any further rotation of the back plate 301 and the plate 393 in the direction of the arrow R' is prevented, as the plate 393 abuts on the stopper 412.

An actuator 401, which may, for example, comprise a hydraulic or pneumatic cylinder, is supported by a frame 402 on the top of the upper plate 411. The actuator 401 has a driving shaft 401a to which a connecting plate 403 is connected. A plurality of push rods 405 are each connected to the connecting plate 403 at one end thereof. When the actuator 401 is driven in the direction of an arrow S or S' in FIGURE 9, the push rods 405 are moved in the direction of the arrow S or S', synchronously.

A stopper 415 and a knock 417 are attached to the respective upper plate 411 and a stand 413 in order to maintain the horizontal position of the back plate 301 when the back plate 301 has been rotated in the direction of the arrow R to a horizontal position. When the back plate 301 has been rotated to its position shown at 301' by two-dot chain lines in FIGURE 9, the back plate 301 abuts on the stopper 415 in order to prevent any further rotation thereof in the direction of the arrow R.

When the back plate 301 abuts on the stopper 415, the knock 417 is pushed leftwardly as viewed in FIGURE 9 by an actuator 419 and engages a knock receiving member 301a provided at one end of the back plate 301 to maintain it in its horizontal position.

The actuator 419 and the knock 417 are supported on the stand 413 elongating from the upper plate 411.

A shaping block 600 is disposed on a frame 441. A rail 443 is provided on the frame 441 and a linear motion bearing 445 is movablly provided on the rail 443. A base 447 is secured on the linear motion bearing 445 and the shaping block 600 is supported on the base 447.

An actuator 453, which may, for example, comprise a hydraulic or pneumatic cylinder, is connected to the base 447. The axial motion of the actuator 453 causes the shaping block 600 and the base 447 move along the rail 443 with the linear motion bearing 445 in the direction of an arrow T or T' in FIGURE 9. The shaping block 600 takes its position shown by solid lines in FIGURE 9 when the actuator 453 has been advanced completely, while it takes its position shown at 600' by two-dot chain lines when the actuator 453 has been completely retracted.

The base 447 is provided therein with a palletspace 611 having a pair of openings located on the right and left sides, thereof as viewed in FIGURE 9. The pallet space 611 is provided for holding a pallet 501. An actuator 455 is provided on the lefthand of the block for ejecting the pallet 501 from the space 611 to the right. A lifting plate 451 is provided below the pallet 501 and an actuator 449 is connected to the lifting plate 451 to move the pallet 501 in the direction of an arrow U or U'.

The detail of the shaping block 600 is described by referring FIGURE 10.

FIGURE 10 is a perspective view of the shaping block 600. The base 447 is located under the shaping block 600, as already stated, and the pallet space 611 which can hold the pallet 501 is defined between the base and the shaping block 600.

The shaping block 600 comprises an outer casing 601 and a core 603 disposed therein. The inner wall of the casing 601 and the outer wall of the core 603 define therebetween an element shaping space 605 extending longitudinally of the block. The space 605 has an open upper end 605a which is shown in FIGURE 11 and an open lower end 605b which is open to the pallet space 611 and is shown in FIGURE 13. FIGURE 13 shows the final shape of a filter element. The element shaping space 605 has a cross-sectional shape which gradually changes from the shape of its upper end 605a as shown in FIGURE 11 to the shape of its lower end 605b as shown in FIGURE 13. The space 605 has intermediate the ends thereof a cross-sectional shape of which is shown by way of example in FIGURE 12.

The shape of the element shaping space 605 at its upper end 605a which is shown in FIGURE 11 is equal to that of the element holding space 350 shown in FIGURE 5. The shape of the space at its lower end 605b which is shown in FIGURE 13 is equal to the final shape of a filter element.

The casing 601 and the core 603 are connected to each other in a mutually fixed positional relation by a mounting plate 607.

The pallet 501 is comprised of a base plate 503, a casing 505 on the base plate 503 and a core 507 in the casing 505. The outer wall of the core 507 and the inner wall of the casing 505 define therebetween a pallet space 510 having a cross-sectional shape which is the same as that of the lower end 605b of the shaping device 600 or the shaping space 113 shown in FIGURE 13. Therefore, the element 113 leaving the lower end of the element shaping space 605 maintains its shape when it is transferred into the pallet space 510.

When the back plate 301 is in its position shown at 301' by the two-dot chain lines in FIGURE 9 while the shaping device 600 is in its position shown at 600' by the two-dot chain lines, the pusher rods 405 extend through the rod receiving holes 381 of the back plate 301 and face the upper end of the element shaping space 605 of the shaping device 600.

The actuator 401 is driven by a distance which corresponds to the height of a single element 113. A plurality of elements 113 are received one after another into the element shaping space 605 through its upper end and are moved down one by one each time the pusher rods 405 are lowered. Therefore, each element 113 is transferred into the pallet 501 through the lower end of the space 605 when the pusher rods 405 have been actuated a plurality of times. Alternatively, each pusher rod 405 may be formed from a deformable material, such as a piano wire, and have a length which is equal to that of the shaping space 605, as shown in FIGURE 14. The pusher rods shown in FIGURE 14 are used for pushing one filter element 113 at a time from the upper end of the space 605 to its lower end for delivery to the pallet 501.

The operation of the apparatus is described hereinafter.

The strip 110 which has been unwound from the roll 109 is fed into the nip between the line marking rollers 111 via the first and second auxiliary rollers 108 and 107 and a plurality of appropriately spaced apart folding lines are cut in the surfaces of the strip by the rollers 111.

Then, the strip 110 enters the nip between the folding rollers 112 and is folded into a continuously corrugated shape. An appropriate length forming a filter element 113 is cut from the strip by the cutter 114 and is longitudinally conveyed by the chain 116.

The element 113 is, then, transferred from the folding device 100 into the guide plates 209 in the contracting device 200. The element 113 in the contracting device 200 is supported by the upper guide members 220 of the expanding and contracting device 201 in its lowest ridge portions and by the lower guide members 227 in its highest ridge portions. Then, the driving device 253 is driven in order to drive the chains 213 in the direction of the arrow A in FIGURE 1 through the coupling 251 and the sprockets 211. As the attachments 241 are connected to the chains 213, the blocks 207 are moved in the direction of the arrow A, too. Therefore, the upper and lower blocks 202 and 203 which are connected to the blocks 207 by the upper and lower guide bars 205a and 205b, are also moved in the direction of the arrow A. The upper blocks 202 are moved to one another, as they are connected to one another by the pantograph 223. The lower blocks 203 are also moved to one another, as the lower guide members 227 which are connected to the lower blocks 203 move along the guide grooves 235. The element 113 is, therefore, contracted in the direction in which the upper and lower guide members are juxtaposed, i.e., the ridges of the element are juxtaposed to one another, while it is caused to slide along the guide plates 209 in the direction of the arrow A.

The element 113 which has been appropriately contracted reaches the shaping gate 290 and is transferred therethrough to the rounding device 300 by the pusher 390.

The element 113 is pushed into the element holding space 350 of the blocks 331 to 341 in the rounding device 300.

Then, the actuator 375 drives the element 113 in order to be deformed in two opposite directions from the pin 391 through the rack 373, first and second gears 371 and 372, levers 369 and 370 and link plates 365 and 366 so that the element 113 forms a circular shape as shown in FIGURE 17. The blocks 331 to 341 which have been placed in a circular array are held together by the pins when the pins are inserted through the pin holes 362 of the links 361a and 361f. Then, the actuator 409 rotates the back plate 301 in the direction of the arrow R in FIGURE 9 to its position shown at 301' by the two-dot chain lines.

Then, the actuator 453 moves the shaping device 600 to its position shown at 600' by the two-dot chain lines in FIGURE 9.

The actuator 401, then, advances the pusher rods 405 in the direction of the arrow S. The pusher rods 405 pass through the rod receiving holes 381 of the back plate 301 and push the filter element out of the blocks of the rounding device 300 into the shaping space 605 of the shaping device 600 through its upper end. When one filter element has been placed in the shaping device 600, the shaping device 600 is returned to its position shown by the solid lines in FIGURE 9 and the back plate 301 is also returned to its position shown by the solid lines.

The sequence of operation which has hereinabove been described is repeated for rounding a second filter element and inserting it into the shaping device 600 through its upper end. The second element is pushed down through the shaping device by the element which has first been inserted thereinto. This operation is repeated for moving a plurality of filter elements one after another from the upper end of the shaping device to its lower end. As each element is moved down through the shaping space 605, it is gradually deformed into a final cross-sectional shape, since the space 605 has a gradually varying cross-sectional shape which terminates at its lower end in the final shape of the filter element.

The filter element 113 which has been formed into its final shape is transferred into the inner space 611 of the pallet 501 in the pallet space 611. Then, the actuator 455 is driven for movement to the right in FIGURE 9 to eject the pallet 501 in the same direction.

When the element is transferred from the shaping device 600 to the pallet 501, the pallet 501 is raised by the actuator 449 in the direction of the arrow U in FIGURE 9 to its uppermost position. When the element 113 has been received in the pallet 501, the actuator 449 is driven in the direction of the arrow U' to lower the pallet to its original position. Then, the actuator 455 ejects the pallet 501, as described hereinabove.

The pallet 501 holding the element 113 is, then, conveyed to an element lowering device not shown.

When the element 113 is transferred from the contracting device 200 to the rounding device 300, the blocks 331 to 341 of the rounding device 300 lie in a straight line. When the element is transferred from the rounding device 300 to the shaping device 600, the blocks 331 to 341 lie in a curcular array as shown in FIGURE 5. The pusher rods 395 of the pusher 390 are moved in the direction of the arrow Q or Q' in FIGURE 9 by the actuator 391 and in the direction of the arrow P or P' by the actuator 425.

The back plate 301 is rotated in the direction of the arrow R or R' if the actuator 409 is driven in the direction f the arrow W or W'. The shaping device 600 is reciprocatively moved by the actuator 453 between its positions shown by the broken and solid lines in FIGURE 9 when each filter element 113 is transferred to the pallet 501. Thus, each filter element is shaped into a product having a plurality of folds as shown in FIGURE 15.

## Claims

1. Process for making a filter from a material for a filter element comprising the steps of
corrugating a strip (110) of the material so that the ridges of the corrugated strip have increasing and decreasing dimensions,
contracting the continuously corrugated strip (113) so that the distance between adjacent ridges of the corrugated strip is reduced,
rounding the corrugated strip so that both end of the strip are connected to each other,
shaping the rounded corrugated strip around one end portion of a core so that the corrugated strip makes a circle, and
pushing the corrugated strip to another portion of the core so that the corrugated strip makes a predetermined shape of a filter element.

2. An apparatus for performing the process of claim 1, comprising;
a guide plate (209) on which a strip (110) slides in a direction perpendicular to a direction in which said strip (110) is contracted;
said guide plate (209) including a plurality of guide grooves (235) extending in a direction substantially perpendicular to said direction in which said strip is contracted, said grooves (235) being spaced apart from one another by a distance which decreases from one end of said guide plate (209) to the other end thereof;
a plurality of lower guide members (227) moving together along said guide grooves (235), while supporting said strip thereon in such a manner that each of said lower guide members engages in a respective valley formed on the lower side of said strip; and
a plurality of upper guide members (220) each located between adjoining two of said lower guide members (227) and spaced apart from one another by a distance which decreases with the movement of said upper guide members from said one end of said guide plate (209) to said other end thereof, said upper guide members supporting said strip in such a manner that each of said upper guide members (220) engages in a respective valley formed on the upper side of said strip.

## Patentansprüche

1. Verfahren zum Anfertigen eines Filters aus einem Material für ein Filterelement, umfassend die Schritte des
Falzens eines Materialstreifens (110), so daß die Kämme des gefalzten Streifens zunehmende und abnehmende Abmessungen aufweisen,
Kontrahierens des kontinuierlich gefalzten Streifens (113), so daß der Abstand zwischen benachbarten Kämmen des gefalzten Streifens reduziert wird,
Rundens des gefalzten Streifens, so daß beide Enden des Streifens miteinander verbunden werden,
Formens des gerundeten, gefalzten Streifens um einen Endabschnitt eines Kerns, so daß der gefalzte Streifen einen Kreis bildet und
des Schiebens des gefalzten Streifens zu einem anderen Abschnitt des Kerns, so daß der gefalzte Streifen eine vorbestimmte Gestalt eines Filterelementes annimmt.

2. Apparat zur Durchführung des Verfahrens nach Anspruch 1, mit
einer Führungsplatte (209), auf welcher ein Streifen (110) in einer Richtung senkrecht zu einer Richtung, in welcher der Streifen (110) kontrahiert ist, gleitet, wobei
die Führungsplatte (209) eine Anzahl von Führungsrillen (235) aufweist, die sich in eine Richtung im wesentlichen rechtwinklig zu der Richtung, in welcher der Streifen kontrahiert ist, erstrecken, wobei die Rillen (235) durch einen Abstand voneinander entfert sind, welcher von einem Ende der Führungsplatte (209) zu deren anderem Ende abnimmt;
einer Anzahl von unteren Führungselementen (227), die sich zusammen entlang der Führungsrillen (235) bewegen, während der Streifen darauf derart abgestützt ist, daß jedes der unteren Führungselemente in ein entsprechendes Tal eingreift, welches an der unteren Seite des Streifens ausgebildet ist, und
einer Anzahl von oberen Führungselementen (220), von denen jedes zwischen zwei nebeneinander liegenden unteren Führungselementen (227) angeordnet ist und voneinander durch einen Abstand entfernt sind, welcher mit der Bewegung der oberen Führungselemente von dem einen Ende der Führungsplatte (209) zu deren anderem Ende abnimmt, und wobei die oberen Führungselemente den Streifen derart abstützen, daß jedes der oberen Führungselemente (220) in ein entsprechendes Tal eingreift, welches an der oberen Seite des Streifens ausgebildet ist.

## Revendications

1. Procédé pour réaliser un filtre en un matériau pour élément de filtre, comprenant les étapes consistant à:
onduler une bande (110) du matériau de manière que les crêtes de la bande ondulée soit de dimensions croissantes et décroissantes,
contracter la bande ondulée continue (113) de manière que la distance entre crêtes adjacentes de la bande ondulée soit réduite,
arrondir la bande ondulée de manière que les deux extrémités de la bande soit reliées l'une à l'autre,
former la bande ondulée et arrondie autour d'une portion d'extrémité d'un noyau de manière que la bande ondulée forme un cercle, et
pousser la bande ondulée vers une autre portion du noyau de manière que la bande ondulée prenne la forme prédéterminée d'un élément de filtre.

2. Dispositif pour la mise en oeuvre du procédé selon la revendication 1, comprenant:
une plaque de guidage (209) sur laquelle coulisse une bande (110) dans une direction perpendiculaire à la direction dans laquelle ladite bande (110) est contractée;
ladite plaque de guidage (209) comprenant plusieurs gorges de guidage (235) s'étendant dans une direction sensiblement perpendiculaire à ladite direction dans laquelle ladite bande est contractée, lesdites gorges (235) étant espacées les unes des autres d'une distance qui diminue d'une extrémité de ladite plaque de guidage (209) vers son autre extrémité,
plusieurs éléments de guidage inférieurs (227) se déplaçant ensemble le long desdites gorges de guidage (235) tout en supportant ladite bande de manière que chacun desdits éléments de guidage inférieurs soit en engagement avec une vallée respective formée sur le côté inférieur de ladite bande; et
plusieurs éléments de guidage supérieurs (220) disposés chacun entre deux desdits éléments de guidage inférieurs (227) qui sont voisins et espacés les uns des autres d'une distance qui diminue avec le mouvement desdits éléments de guidage supérieurs à partir de ladite extrémité de ladite plaque de guidage (209) vers son autre extrémité, lesdits éléments de guidage supérieurs supportant ladite bande de manière que chacun desdits éléments de guidage supérieurs (220) soit engagé dans une vallée respective formée sur le côté supérieur de ladite bande.
